# EUROPÄISCHE PATENTSCHRIFT

(11) **EP 0 618 404 B1**
(45) Veröffentlichungstag und Bekanntmachung des Hinweises auf die Patenterteilung: **17.09.1997**
(21) Anmeldenummer: 94102109.9
(22) Anmeldetag: 11.02.1994
(51) Int. Cl.: F22B 37/02, F22D 1/12

(54) **Verfahren und Vorrichtung zur Dampferzeugung in einem Heizkraftwerk**
Method and installation for generating steam in a heat power plant
Procédé et installation pour la génération de vapeur dans une centrale de puissance et de chaleur

(30) Priorität: 27.03.1993 DE 4310009
(43) Veröffentlichungstag der Anmeldung: 05.10.1994
(73) Patentinhaber: Müllkraftwerk Schwandorf Betriebsgesellschaft mbH, D-92421 Schwandorf (DE)
(72) Erfinder: Krüger, Jörg, Dr., D-92421 Schwandorf (DE)
(74) Vertreter: Müller-Wolff, Thomas, Dipl.-Ing.

(56) Entgegenhaltungen:
- DE-A- 3 117 466
- DE-A- 3 616 095
- FR-A- 976 227
- FR-A- 2 551 181
- GB-A- 871 703
- NL-A- 8 203 813

## Beschreibung

Die Erfindung betrifft ein Verfahren zur Dampferzeugung in einem Heizkraftwerk von Speisewasser in einem Verbrennungskessel 1, Kondensation des Heißdampfes und Rückführung nach Wärmeabgabe und Wiedereinsatz als Speisewasser, wobei ein Teil des Wärmegehaltes der Rauchgase 6 des Verbrennungskessels 1 über einen Economiser 2 dem Speisewasser zugeführt wird, dessen Durchsatz und Temperatur vor Eintritt in den Economiser 2 unabhängig von einem Speisewasserbedarf 4 des Verbrennungskessels 1 so eingestellt wird, daß die Oberflächentemperatur des Economisers auf einen Wert über dem Taupunkt des Abgases gehalten wird, sowie eine Vorrichtung zur Durchführung des Verfahrens.

Ein Verfahren der eingangs genannten Art ist aus der GB-A 87 17 03 bekannt. Dabei wird die Oberflächentemperatur des Economisers durch Rezirkulation eines Teils des Speisewassers auf einen Wert über dem Taupunkt des Abgases gehalten. Die Rezirkulation erfolgt unabhängig vom Speisewasserbedarf und bewirkt eine Erhöhung des Massenstroms im Economiser, wobei durch Vermischen des rezirkulierten Speisewassers mit einem Frischwasser oder Kondesat das Speisewasser auch vor der Zuführung zum Economiser abgekühlt wird.

Nach NL-A 82 03 813 wird bei einem Dampferzeuger mittels eines Temperaturfühlers am Ausgang des Economisers die Temperatur des Speisewassers ermittelt und bei Anstieg über einen vorbestimmten Wert das Speisewasser zum Eingang des Economisers rezirkuliert. Durch diese Maßnahme soll ein Sieden des Speisewassers im Economiser vermieden werden.

Bei der Auslegung des Economisers sind verschiedene Randbedingungen zu beachten. So möchte man einerseits dem Rauchgas möglichst viel Wärme entziehen, kann jedoch andererseits die Austauschfläche des Economisers nicht so groß auslegen, daß das Speisewasser bereits im Economiser siedet. Wenn jedoch zu kaltes Speisewasser in den Economiser eingeführt wird, können leicht Taupunktunterschreitungen auf der rauchgasseitigen Oberfläche des Economisers entstehen. Diese führen zu Korrosionserscheinungen, da saure Bestandteile wie z. B. SO₃, HCl und CO₂ im Rauchgas enthalten sind.

Mit der Reisezeit des Verbrennungskessels steigt die Rauchgastemperatur vor und nach dem Economiser und damit auch die zu übertragende Wärmeleistung bzw. die Verlustwärme über erhöhte Abgastemperaturen. Da die Speisewassermenge annähernd der Dampfleistung und proportional der Rauchgasmenge ist, kann in diesen Fällen das Sieden des Speisewassers im Economiser nur durch eine aufwendige Regelung verhindert werden. Eine Lastreduktion ändert wegen der beschriebenen Proportionalität diesen Siedezustand nicht. Auch hier besteht die Gefahr der Entstehung von Schäden.

Bei normalem Betrieb der Dampferzeugungsanlage und großzügiger Auslegung des Economisers nach dem gegenwärtigen Stand der Technik würde das Niveau der Speisewassertemperatur im Verlauf einer Reisezeit im Economiser ständig ansteigen. Die mit der Reisezeit aufsteigende Verschmutzung wird auf den rauchgasseitigen Austauschflächen belassen, um das Erreichen der Siedetemperatur möglichst lange zu vermeiden. Dabei steigt allerdings auch die Abgastemperatur und damit der Wärmeverlust der Gesamtanlage. Dieses Problem hat sich durch die Installation von modernen Abgasreinigungsanlagen mit Gewebefiltern noch verschärft.

Bei modernen Verbrennungsanlagen, die aus einem Feuerungsraum mit Verdampferheizflächen, auch Nachschaltheizflächen und einem Economiser bestehen sowie nachgeschaltete Rauchgasreinigungsanlagen aufweisen, ist es bisher notwendig, bei Stillständen des Verbrennungskessels und der Rauchgasreinigungsanlage die Abluft über einen Bypass zu entsorgen. Das Gewebefilter in der Rauchgasreinigungsanlage kann bei Taupunktunterschreitungen nicht eingesetzt werden. Somit sind Emissionen bei Stillständen der Anlage unvermeidlich.

Bei jedem Anfahren der Verbrennungsanlage nach einem Stillstand muß der Kessel über Fremdheizung, wie z. B. Luftvorwärmung oder Kesselfremdheizung, und über natürliche Konvektionen durch den Bypass beheizt werden. Die für die Rauchgasreinigungsanlage erforderliche Erwärmung der Abluft auf etwa 120 °C wird dadurch jedoch nicht erreicht. In diesem Fall muß zusätzlich Speisewasser mit einer Temperatur von 130 °C bis 150 °C durch den Economiser gefahren werden.

Das Speisewasser kann wegen des Hydrazin- und Ammoniakgehaltes nur aufwendig entsorgt werden. Eine direkte Rückführung in den Speisewasserkreislauf muß entfallen, da sich hohe Verunreinigungen mit Salzen und Feststoffen während der Aufheizphase angesammelt haben. Die Aufheizzeit nach Schließen der Verbrennungsanlage liegt bei ca. 24 Stunden.

Aufgabe der Erfindung ist es nun, ein Verfahren und eine Vorrichtung zu entwickeln, die es ermöglichen, eine effektive Dampferzeugung bei maximaler Wärmenutzung durch die installiertern Heizflächen sicherzustellen und gleichzeitig die Vorwärmung der Abluft und des Rauchgases bei An- und Abfahrvorgängen sicherzustellen.

Die Lösung dieser Aufgabe erfolgt hinsichtlich der Verfahrenstechnik durch die Merkmale des Anspruchs 1 und hinsichtlich der einzusetzenden Vorrichtung durch die Merkmale des Anspruchs 5.

Erfindungsgemäß ist ein zusätzlicher Rezirkulationskreislauf vorgesehen, der aus einem Speisewasserentnahmeventil, einem Rezirkulationsregelventil, einem Speisewasserentgasungsbehälter mit einem Entspanner, einem zweitem im Kondensationsbehälter angeordneten Entspanner, einer Kesselspeisepumpe, einem Speisewasservorwärmer und einem Speisewasserregelventil besteht.

Mit der Erfindung wird im angegebenen Anwendungsfall erreicht, daß eine maximale Wärmenutzung durch die installierten Heizflächen sichergestellt ist. Gleichzeitig wird erreicht, daß bei Anfahrvorgängen eine Vorwärmung der Abluft und des Rauchgases zur Verhinderung von Taupunktsunterschreitungen sichergestellt werden kann. Die Wärmenutzung liegt bei gleichen Randparametern wie Heizfläche, Temperatur des Rauchgases und des Speisewassers vor dem Economiser höher als vor Anwendung der Erfindung. Durch die über die zur Dampferzeugung hinausgehende Speisewassermenge wird eine Temperaturabsenkung im Economiser und damit ein höherer Wärmefluß vom Rauchgas zum Economiser erzeugt und somit ebenfalls eine bessere Wärmenutzung erreicht.

Der Investitionsaufwand für den Rezirkulationskreislauf ist gering. Die vorhandenen Wärmetauscherflächen sind ohne Erweiterung nutzbar.

Die Speisewasserversorgung erfolgte bisher über volumenund druckmäßig überdimensionierte Speisewasserpumpen. Die Überdimensionierung war notwendig, um sicherzustellen, daß bei Kesselschäden mit Wasserverlusten und zu hohem Druck am Kessel keine nachhaltigen Schäden - im Extremfall Totalschäden - infolge von Wassermangel und Überhitzungen auftraten. Die Speisewassermengenregelung erfolgte bisher über eine Drosselung mittels Speisewasserregelventils.

Erfindungsgemäß kann durch eine Entnahmeregelung eines Teilstromes des Speisewassers vor der Trommel, der Trommelwasserstand gleichermaßen, bei jedoch größerer Wassermenge im Economiser, ohne zusätzliche Aufwendungen bei der Speisewasserversorgung geregelt werden. Die Sicherheit der Kesselanlage wird nicht beeinträchtigt, da im Schadensfall mit hohen Wasserverlusten die Entnahmeregelung durch die Niveauregelung in der Trommel automatisch geschlossen wird und die gesamte Speisewassermenge für den Kessel und gleichzeitig zur Kühlung des Economisers zur Verfügung steht.

Vorteilhafte Ausgestaltungen und Weiterbildungen des erfindungsgemäßen Verfahrens ergeben sich aus den Unteransprüchen 2 bis 7.

Die erfindungsgemäße Ausgestaltung des Anspruches 2, daß die Einstellung der Temperatur des Speisewassers in Abhängigkeit vom Temperaturregime im Economiser in einem Speisewasservorwärmer und/oder in einem Entspanner eines Speisewasserentgasungsbehälters erfolgt, erlaubt es, daß in allen wichtigen Phasen des Betriebes des Heizkraftwerkes, der Stillstandphase, der Anfahrphase, der Normalbetriebsphase und der Abfahrphase, unter Berücksichtigung der Temperaturverhältnisse im Economiser die Speisewassertemperaturen festzulegen. Im Falle der Stillstandsphase des Kessels besteht generell die Gefahr, daß die Temperaturen im Economiser und in der nachgeschalteten Rauchgasreinigungsanlage unter den Taupunkt des Wassers absinken. Das hat zur Folge, daß Kondensationen der Feuchtigkeit, die sich in der Abluft und in den Rauchgasen befindet, im Economiser und im Reinigungsfilter möglich sind. Die damit verbundenen Nachteile lassen sich nun dadurch verhindern, daß das Speisewasser auf eine Temperatur aufgeheizt wird, die es ermöglicht, entweder die Abluft oder das Rauchgas über den Austausch im Economiser auf Temperaturen aufzuheizen, daß eine Kondensation von enthaltener Feuchtigkeit an der Austauschfläche des Economisers oder der Rauchgasreinigungsanlage - speziell im Gewebefilter - unmöglich ist. In der Phase des Normalbetriebes, in der die Gefahr besteht, daß das Speisewasser in die Bereiche der Siedetemperatur aufgewärmt wird, ist es möglich, durch die Aktivierung des Rezirkulationskreislaufes einen Teil des Speisewassers nach dem Economiser und vor dem Eintritt in den Verbrennungskessel über einen oder zwei Entspanner im Speisewasserentgasungsbehälter oder im Kondensatsammelbehälter unter Vorwärmung des Speisewassers abzukühlen und wieder dem Hauptkreislauf zuzuführen.

Wie im Anspruch 3 weiterbildend ausgeführt wird, ist es zweckmäßig, daß in der Stillstandsphase des Verbrennungskessels das über den Rezirkulationskreislauf im Umlauf gefahrene Speisewasser vor Eintritt in den Economiser auf ca. 130°C erwärmt wird. 130°C ist eine Temperatur, die es ermöglicht, über die Austauschflächen im Economiser die Abluft, die nach dem Stillstand des Verbrennungskessels durch den Verbrennungsraum und das Rauchgassystem geführt wird, um die Reinigungsarbeiten möglichst staubfrei und ohne weitere Belästigungen durchführen zu können, so zu erwärmen, daß der Reinigungsfilter auch weiterhin in Betrieb bleiben kann.

In der erfindungsgemäßen Weiterbildung des Anspruches 4, der die Anfahrphase des Verbrennungskessels betrifft, wird zunächst vor dem Anfahren des Verbrennungskessels eine Speisewassermenge im Umlauf gefahren. Auch hier wird das Speisewasser im Speisewasservorwärmer auf ca. 130° - 150°C erwärmt. Das Speisewasser wird dann so lange im Umlauf geführt, bis eine Ablufttemperatur von ca. 120°C das Anfahren der Verbrennungsanlage möglich macht. Auch in dieser Phase treten keine nachteiligen Kondensationen im Economiser und auf den Gewebefiltern der Rauchgasreinigungsanlage auf.

In der weiteren erfindungsgemäßen Ausgestaltung des Anspruches 5, daß im Normalbetrieb des Verbrennungskessels bei Ansteigen der Speisewassertemperatur bis in den Siedebereich der Speisewassermengendurchsatz im Economiser erhöht wird, daß nach Austritt aus dem Economiser ein Teil der Speisewassermenge im Umlauf gefahren wird und im Laufe der Rezirkulation das Speisewasser wieder abgekühlt wird, macht es möglich, daß solche Betriebszustände, die ein Ansteigen der Speisewassertemperatur herbeiführen, aufgrund der Anwendung des erfindungsgemäßen Verfahrens nicht mehr auftreten. Bei zu großem Wärmeangebot aus dem Rauchgas, das entstehen kann, wenn das Rauchgas zu heiß ist, wenn eine zu große Rauchgasmenge entsteht oder wenn ein zu guter Wärmeübergang im Economiser oder eine zu große Heizfläche vorhanden ist, steigt die Temperatur des Speisewassers im Economiser auf über die Siedetemperatur. Bisher konnte schnelle Abhilfe nur dadurch erreicht werden, daß durch zusätzliches Speisewasser und Ablaß des zusätzlichen Speisewassers durch Trommelablaß eine Abkühlung erreicht wurde.

Die erfinderische Ausgestaltung des Anspruches 6, daß der Verbrennungskessel durch Kühlung mit maximaler Verbrennungsluftmenge über die Rauchgasreinigungsanlage abgefahren wird, erlaubt es auf vorteilhafte Weise, das Abfahren des Kessels in kürzester Zeit durchzuführen.

Hierbei werden beim Anfahren mit maximaler Verbrennungluftmenge - ohne Brennstoff - über die Rauchgasreinigungsanlage die Forderungen des Unweltschutzes voll eingehalten. Ein Absinken der zur Kesselkühlung benutzten Verbrennungsluft unter den Taupunkt kann ggf. über eine zusätzliche Erhöhung der Temperatur und der Menge des Speisewassers verhindert werden, das in den Rezirkulationskreislauf zurückgeführt und zur weiteren Vorwärmung des Speisewassers genutzt wird.

Die erfindungsgemäße Weiterbildung des Anspruches 7, daß der Verbrennungskessel als Müllverbrennungsanlage gefahren wird, macht es möglich, Müll einzusetzen, dessen Brennwert in weiten Grenzen schwanken kann. Brennwertschwankungen können in der Phase des Normalbetriebes auch Schwankungen der Temperatur des Rauchgases hervorrufen, mit den Folgen, daß auch die Speisewassertemperatur sich verändern kann. Durch Anwendung des erfindungsgemäßen Verfahrens ist es möglich, diese unterschiedlichen Wärmeangebote effektiv und umweltschonend auszugleichen.

Das Verfahren und die Vorrichtung werden beispielhaft an einer Zeichnung erläutert. Es zeigt:

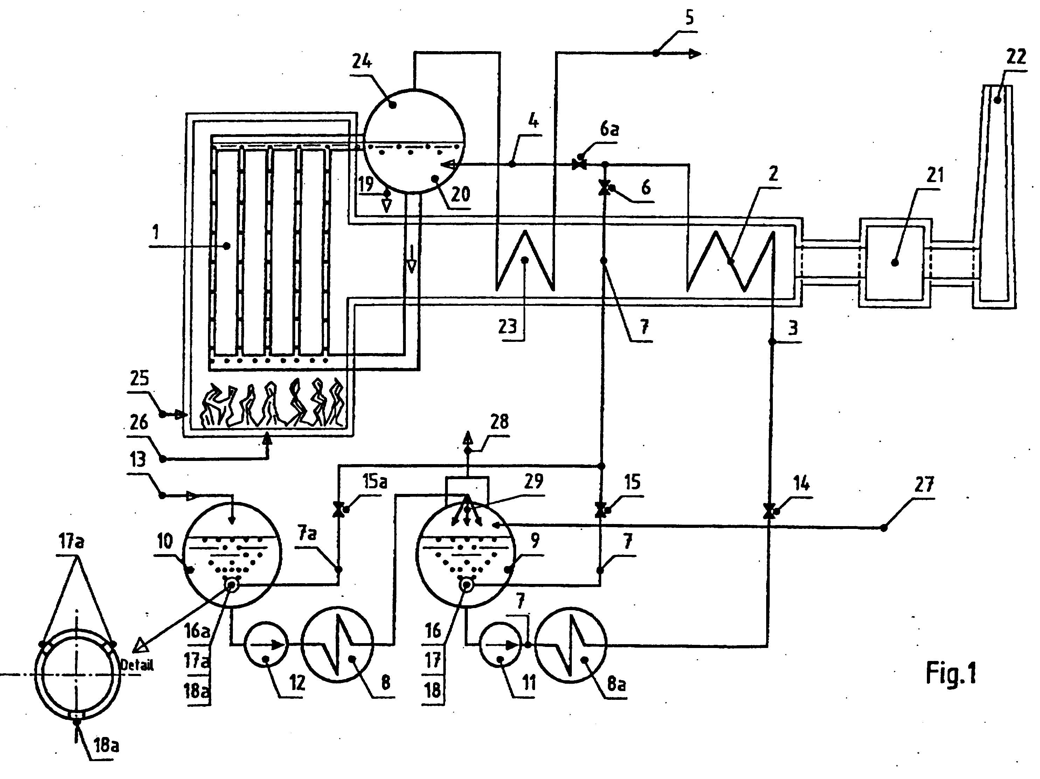

- Figur 1: Vorrichtung und Verfahrensschema zur Dampferzeugung in einem Heizkraftwerk.

In einem Verbrennungskessel 1, der mit einer Trommel 24 in Verbindung steht, wird durch Beheizen mit Brennstoff über die Brennstoffaufgabe 25 und Verbrennungsluft über die Verbrennungsluftzuführung 26 Sattdampf erzeugt, der aus der Trommel 24 austretend in den Nachschaltheizflächen 23 überhitzt und über den Frischdampfaustritt 5 zu den Verbrauchern geleitet wird. Der Rücklauf des kondensierten Dampfes und des bei den Verbrauchern abgekühlten Kondensates erfolgt über einen Kondensatzulauf 13, in den Kondensatsammelbehälter 10. In diesem Kondensatsammelbehälter 10 ist ein liegender Entspanner 16a angeordnet, aus dem Entspanndampf über nach oben gerichtete Dampfaustrittsdüsen 17a das kalte Kondensat bei Bedarf beheizt. Das Kondensat des Entspanners 16a wird über unten liegende Wasseraustrittsbohrungen 18a direkt dem Speisewasser zugemischt. Eine Kondensatpumpe 12 fördert das Kondensat über einen Speisewasservorwärmer 8 und die Entgasungsvorrichtung 29 in den Speisewasserentgasungsbehälter 9. Im Normalbetrieb erfolgt durch Dampf über die Prozeßdampfzuführung 27 und Entspanndampfeinleitung aus dem Entspanner 16 eine Entgasung und Aufheizung auf ca. 103°C. Luft und andere Gase entweichen über den Entgasungsstutzen 28. In dem Speisewasservorwärmer 8a erfolgt dann eine Speisewasservorwärmung auf Temperaturen, die Taupunktsunterschreitungen im Rauchgasweg weitgehend ausschließen. Über eine Economiserzuführung 3 tritt das Speisewasser in den Economiser 2 ein. An den hier befindlichen Austauschflächen erfolgt der Wärmetausch zwischen Rauchgas und Speisewasser. Nach dem Austritt des Speisewassers aus dem Economiser 2 erfolgt die Zuführung des Speisewassers über die Trommelzuführung 4 in die Trommel 24. Ein Rezirkulationskreislauf 7 und 7a erlaubt es, je nach Bedarf einen Teil des kurz vor Siedetemperatur erhitzten Speisewassers über das Rezirkulationsventil 6 und das Rezirkulationsregelventil 15 vor dem Eintritt in die Trommel 24 des Verbrennungskessels 1 abzuleiten. Dieser Teilstrom wird über die Rezirkulationsregelventile 15a und 15 in den Entspanner 16a und 16 des Kondensatsammelbehälters 10 bzw. des Speisewasserentgasungsbehälters 9 geführt. In den Entspannern 16a und 16 siedet das überhitzte Wasser durch Druckabsenkung. Der Entspanndruck in den Entspannern 16a und 16 wird durch die Anzahl und Dimensionierung der Dampfaustrittsdüsen 17a und 17 so gewählt, daß weder am Rezirkulationsventil 15a und 15 noch an den Dampfaustrittsdüsen 17a und 17 unzulässige Belastungen auftreten. Der Entspanndampf beheizt über die Dampfaustrittsdüsen 17a und 17 das Speisewasser ohne Materialschäden durch Dampfschläge. Das bei der Entspannung anfallende Kondensat wird zum Schutz der Dampfaustrittsdüsen 17a und 17 gegen Mehrphasenströmung über besonders geschützte Wasseraustrittsbohrungen 18a und 18 aus den Entspannern 16a und 16 direkt in das Speisewasser geleitet. Über die Kondensatpumpen 12, den Speisewasservorwärmer 8, den Speisewasserentgasungsbehälter 9, die Kesselspeisewasserpumpe 11 und den Speisewasservorwärmer 8a wird das rezirkulierende Speisewasser wieder in den Economiser 2 geführt.

Durch die Stellung des Speisewasserregelventils 14 und der Rezirkulationsregelventile 15a und 15 wird der Wasserstand in der Trommel 24 auf den Sollwert geregelt.

Die Verbrennungsgase streichen an den Nachschaltheizflächen 23 und den Austauschflächen des Economisers 2 vorbei und treten in die Rauchgasreinigungsanlage 21 ein, die z.B. mit Gewebefiltern zur Staubabscheidung ausgerüstet ist. Über einen Kamin 22 wird das Rauchgas in die Atmosphäre abgeleitet.

Die Abluft bei Stillstand des Verbrennungskessels 1 und die Primärluft beim Abfahren des Verbrennungskessels 1 nimmt den gleichen Weg. Bei Stillstand des Verbrennungskessels 1 kann die Abluft durch Beheizen des Economisers 2 mit Speisewasser von z.B. 130°C über die Rauchgasreinigungsanlage 21 gefahren werden. Hierfür können bis zu 40 t/h Speisewasser über den Economiser 2 gefahren werden. Üblicherweise reichen 5 bis 10 t/h Speisewasser. Hierfür wird das Trommelzufuhrventil 6a geschlossen und das Rezirkulationsventil 6 geöffnet. Das Speisewasser wird direkt über den Rezirkulationskreislauf 7 in den Speisewasserentgasungsbehälter 9 zurückgefahren. Die Energiezufuhr für die Vorwärmung der Luft erfolgt über den dampfbeheizten Speisewasservorwärmer 8a. Die Rückführung in den Speisewasserentgasungsbehälter 9 sichert eine Wärmenutzung auch für den Fall, daß das Speisewasser mit Temperaturen von ca. 125°C über dem Temperaturniveau des Speisewasserentgasungsbehälters 9, z.B. 103°C, zurückgeführt wird. Die Abluftmenge und deren Beheizung kann den Erfordernissen der Belüftung bei Reinigungs- und Reparaturarbeiten angepaßt werden. Beim Anfahren einer Müllverbrennungsanlage wurde der Economiser 2 durch eine Wassermenge von ca. 5 t/h auf etwa 140°C erwärmt. Die Abluft von ca. 50 000 Nm³/h konnte bei der Vorbelüftung hierdurch auf 120 °C erwärmt werden. Bei kaltem Verbrennungskessel 1 und Economiser 2 kann mittels des erfindungsgemäßen Verfahrens innerhalb von ca. 8 Stunden ohne Speisewasserverluste eine Ahlufttemperatur von 120°C sichergestellt und damit auf die Rauchgasreinigungsanlage 21 gefahren werden. War der Economiser während des Stillstandes in Warmhalteschaltung, kann der Verbrennungskessel sofort angefahren werden. Für Vorbelüftung sollte die Primärluft vorgewärmt werden. In der Phase des Normalbetriebes bei einer Dampfleistung von 40 t/h und einer Rauchgasmenge von 95000 Nm³/h nach Verbrennungskessel 1 ergab ein Versuch folgendes Ergebnis. Die Primärluftmenge von 50000 Nm³/h und die Sekundärluftmenge von 28000 Nm³/h wurde während des Versuches nicht verändert. Die Feuerleistungsregelung zog etwas an. Die Speisewasserleistung wurde um 12 t/h erhöht. Die Vorlauftemperatur des Speisewassers änderte sich im Verlaufe des Versuches von 122°C auf 123°C. Die Austrittstemperatur des Speisewassers aus dem Economiser 2 fiel durch die Speisewassermengensteigerung von 247°C auf 228°C. Die Rauchgastemperaturen nach dem Economiser 2 fielen von 227°C auf 224°C. Das rückgeführte Speisewasser verdampfte zu etwa 35% und führte dem Speisewasserentgasungsbehälter 9 eine Dampfmenge von ca. 4 t/h zu. Die Dampfleistung von 40 t/h der Anlage änderte sich während des Versuches nicht. In der Abfahrphase des Verbrennungskessels 1 kann zügig mit maximaler Primärluftmenge bis zur ausreichenden Kühlung zum Einstieg in die Anlage innerhalb von 18 Stunden über die Rauchgasreinigungsanlage 21 abgefahren werden.

### Bezugszeichenliste

- 1: Verbrennungskessel
- 2: Economiser
- 3: Economiserzuführung
- 4: Kesselzuführung
- 5: Nutzdampfaustritt
- 6: Speisewasserentnahmeventil
- 7: Rezirkulationskreislauf
- 7a: erweiterter Rezirkulationskreislauf
- 8: Speisewasservorwärmer
- 8a: Speisewasservorwärmer
- 9: Speisewasserentgasungsbehälter
- 10: Kondensatsammelbehälter
- 11: Kesselspeisepumpe
- 12: Kondensatpumpe
- 13: Kondensatzulauf
- 14: Speisewasserregelventil
- 15: Rezirkulationsregelventil
- 16: Entspanner
- 16a: Entspanner
- 17: Dampfaustrittsdüsen
- 18: Wasseraustrittsbohrungen
- 19: Trommelablaß
- 20: Abschlemmung
- 21: Rauchgasreinigungsanlage
- 22: Kamin
- 23: Nachschaltheizflächen
- 24: Trommel
- 25: Brennstoffaufgabe
- 26: Verbrennungsluftzuführung
- 27: Prozeßdampfzuführung
- 28: Entgasungsstutzen
- 29: Entgasungsvorrichtung

## Patentansprüche

1. Verfahren zur Dampferzeugung in einem Heizkraftwerk durch Verdampfen von Speisewasser in einem Verbrennungskessel (1), Kondensation des Heißdampfes und Rückführung des Kondensats nach Wärmeabgabe und Wiedereinsatz als Speisewasser, wobei ein Teil des Wärmegehaltes der Rauchgase (6) des Verbrennungskessels (1) über einen Economiser (2) dem Speisewasser zugeführt wird, dessen Durchsatz und Temperatur vor Eintritt in den Economiser (2) unabhängig von einem Speisewasserbedarf (4) des Verbrennungskessels (1) so eingestellt wird, daß die Oberflächentemperatur des Economisers auf einen Wert über dem Taupunkt des Abgases gehalten wird,
dadurch gekennzeichnet,
daß im Normalbetrieb des Verbrennungskessels (1) bei Ansteigen der Speisewassertemperatur im Economiser (2) bis in den Siedebereich der Speisewassermengendurchsatz im Economiser (2) erhöht wird,
und nach Austritt aus dem Economiser (2) ein Teil der Speisewassermenge im Umlauf gefahren wird, wobei dieser Teil des Speisewassers vor Eintritt in eine Trommel (24) des Verbrennungskessels (1) zur Abkühlung einem Entspanner (16) eines Speisewasserentgasungsbehälters (9) oder einem Entspanner (16a) eines Kondensatbehälters und anschließend wieder dem Economiser (2) zugeführt wird.

2. Verfahren nach Anspruch 1,
dadurch gekennzeichnet,
daß die Einstellung der Temperatur des Speisewassers in Abhängigkeit vom Temperaturregime im Economiser (2) in einem Speisewasservorwärmer (8a) erfolgt.

3. Verfahren nach einem der Ansprüche 1 und 2,
dadurch gekennzeichnet,
daß bei Stillstand des Verbrennungskessels (1) eine Speisewassermenge im Umlauf gefahren wird, wobei das Speisewasser vor Eintritt in den Economiser (2) im Speisewasservorwärmer (8a) auf eine Temperatur gebracht wird, die eine Aufwärmung der Rauchgase bzw. Abluft vor der nachfolgenden Rauchgasreinigungsanlage (21) auf eine Temperatur ermöglicht, die über dem Taupunkt der Rauchgase bzw. Abluft liegt, nach Austritt aus dem Economiser (2) wieder dem Speisewasservorwärmer (8a) und dann wieder dem Economiser (2) zugeführt wird.

4. Verfahren nach einem der Ansprüche 1 bis 3,
dadurch gekennzeichnet,
daß vor dem Anfahren des Verbrennungskessels (1) zunächst eine Speisewassermenge im Umlauf gefahren wird, wobei das Speisewasser vor Eintritt in den Economiser (2) im Speisewasservorwärmer (8,8a) auf ca. 130 °C erwärmt, nach Austritt aus dem Economiser (2) wieder dem Speisewasservorwärmer (8,8a) und dann wieder dem Economiser (2) zugeführt wird, und nach dem Überschreiten einer Ablufttemperatur die dem jeweiligen Taupunkt des Abgases entspricht, das Anfahren des Verbrennungskessels (1) erfolgt.

5. Vorrichtung zur Dampferzeugung in einem Heizkraftwerk durch Verdampfen von Speisewasser, bestehend aus einem Verbrennungskessel (1), der mit einem Kondensatsammelbehälter (10) mit einem Kondensatzulauf (13), eine Kondensatpumpe (12), einen Speisewasservorwärmer (8a) und einen Economises (2) zu einem kreislaufartigen System verbunden ist, sowie einer Gasreinigungsanlage (21) für die aus dem Verbrennungskessel (1) abgezogenen Rauchgase,
dadurch gekennzeichnet,
daß ein zusätzlicher Rezirkulationskreislauf (7, 7a) vorgesehen ist, mit dem ein Teil des erhitzten Speisewassers über ein Speisewasserentnahmeventil (6) und ein Rezirkulationsventil (15) in einen Entspanner (16,16a) und danach einen Speisewasserentgasungsbehälter (9) und/oder einen Kondensatsammelbehälter (10) gelangt, wobei das rezirkulierende Speisewasser über die Kondensatpumpe (12), den Speisewasservorwärmer (8a) und das Speisewasserregulierventil (14) in den Economiser (2) zurückgeführt wird.

6. Vorrichtung nach Anspruch 5,
dadurch gekennzeichnet,
daß der Durchmesser des Entspanners (16, 16a), die Anzahl und Abmessung der Dampfaustrittsdüsen (17, 17a) und der Wasseraustrittsbohrungen (18, 18a) so dimensioniert sind, daß das Wasserniveau im Entspanner (16, 16a) eine sichere Trennung von Kondensat und Entspannungsdampf ermöglicht.

## Claims

1. A process of producing steam in a heat and power station by evaporating feedwater in a combustion tank (1), by condensing the hot steam and returning the condensate after heat release and re-use as feedwater, with part of the heat content of the flue gasses(6) of the combustion tank (1) being added, via an economiser (2), to the feedwater whose flow rate and temperature, prior to entering the economiser (2), are adjusted independently of the feedwater requirements (4) of the combustion tank (1) in such a way that the surface temperature of the economiser is held at a value which is higher than the dew point of the exhaust gas,
characterised in
that, under normal operating conditions of the combustion tank (1), when the feedwater temperature in the economiser (2) increases and reaches the boiling range, the feedwater throughput in the economiser (2) is increased and that after the feedwater has left the economiser (2), part of the feedwater quantity is circulated, with said part of the feedwater, before entering a drum (24) of the combustion tank (1), for cooling purposes, being fed into an expander (16) of a feedwater degassing container (9) or into an expander (16a) of a condensate container and thereafter being returned to the economiser (2).

2. A process according to claim 1,
characterised in
that the temperature of the feedwater is set as a function of the temperature regime in the economiser (2) in a feedwater preheater (8a).

3. A process according to any one of claims 1 and 2,
characterised in
that, when the combustion tank (1) stops operating, a certain feedwater quantity is circulated, with the feedwater, prior to entering the economiser (2), being heated in the feedwater preheater (8a) to a temperature which permits the flue gasses and exhaust air in front of the following flue gas cleansing system (21) to be heated to a temperature which is above the dew point of the flue gasses and exhaust air and that the feedwater, after having left the economiser (2), is returned to the feedwater preheater (8a) and then again to the economiser (2).

4. A process according to any one of claims 1 to 3,
characterised in
that prior to starting the combustion tank (1), first a certain feedwater quantity is circulated, with the feedwater, prior to entering the economiser (2), being heated in the feedwater preheater (8, 8a) to approximately 130 °C; with the feedwater, after having left the economiser (2),being returned to the feedwater preheater (8, 8a) and then again to the economiser (2); and that, after an exhaust air temperature which corresponds to the respective dew point of the exhaust gas has been exceeded, the combustion tank (1) is started.

5. A device for producing steam in a heat and power station by evaporating feedwater, consisting of a combustion tank (1) which is connected to a condensate collecting container (10) with a condensate inlet (13), to a condensate pump (12), a feedwater preheater (8a) and an economiser (2) to form a circulation-type system, and further consisting of a gas cleansing system (21) for the flue gasses extracted from the combustion tank (1),
characterised in
that there is provided an additional recirculation circuit (7, 7a) by means of which part of the heated feedwater, through a feedwater removing valve (6) and a recirculation valve (15), reaches an expander (16, 16a) and thereafter a feedwater degassing container (9) and/or a condensate collecting container (10), with the recirculated feedwater being returned into the economiser (2) through the condensate pump (12), the feedwater preheater (8a) and the feedwater regulating valve (14).

6. A device according to claim 5,
characterised in
that the diameter of the expander (16, 16a) and the number and dimensions of the steam exit nozzles (17, 17a) and of the water exit bores (18, 18a) are calculated in such a way that the water level in the expander (16, 16a) permits safe separation of the condensate and expanding steam.

## Revendications

1. Procédé pour la production de vapeur dans une centrale de chauffage par évaporation de l'eau d'alimentation dans une chaudière de combustion (1), condensation de la vapeur chaude et recyclage du condensat après dégagement de chaleur et réutilisation comme eau d'alimentation, une partie de la teneur calorifique des fumées (6) de la chaudière de combustion (1) étant apportée par l'intermédiaire d'un économiseur (2) à l'eau d'alimentation, dont le débit et la température sont, avant l'entrée dans l'économiseur (2), réglés indépendamment d'un besoin d'eau d'alimentation (4) de la chaudière de combustion (1) de telle sorte que la température de surface de l'économiseur est maintenue à une valeur supérieure au point de condensation des fumées,
**caractérisé** en ce qu'en service normal de la chaudière de combustion (1), lorsque la température de l'eau d'alimentation dans l'économiseur (2) monte jusque dans la zone d'ébullition, on augmente le débit quantitatif d'eau d'alimentation dans l'économiseur (2),
et, à la sortie de l'économiseur (2), une partie de la quantité d'eau d'alimentation est mise en circulation, cette partie de l'eau d'alimentation étant, avant l'entrée dans un tambour (24) de la chaudière de combustion (1), apportée aux fins de refroidissement à un détendeur (16) d'un récipient de dégazage d'eau d'alimentation (9) ou à un détendeur (16a) d'un récipient de condensat, puis rapportée à l'économiseur (2).

2. Procédé selon la revendication 1, **caractérisé** en ce que le réglage de la température de l'eau d'alimentation en fonction du régime de température dans l'économiseur (2) s'effectue dans un préchauffeur d'eau d'alimentation (8a).

3. Procédé selon la revendication 1 ou 2, **caractérisé** en ce qu'une quantité d'eau d'alimentation est mise en circulation lorsque la chaudière de combustion (1) est à l'arrêt, l'eau d'alimentation étant, avant l'entrée dans l'économiseur (2), amenée dans le préchauffeur d'eau d'alimentation (8a) à une température qui permet un échauffement des fumées ou encore de l'air sortant, avant l'installation consécutive (21) d'épuration des fumées, à une température qui est supérieure au point de condensation des fumées ou encore de l'air sortant, et l'eau d'alimentation étant, à la sortie de l'économiseur (2), rapportée au préchauffeur d'eau d'alimentation (8a) puis à nouveau à l'économiseur (2).

4. Procédé selon une des revendications 1 à 3, **caractérisé** en ce qu'avant la mise en marche de la chaudière de combustion (1), une quantité d'eau d'alimentation est d'abord mise en circulation, l'eau d'alimentation étant, avant l'entrée dans l'économiseur (2), échauffée dans le préchauffeur d'eau d'alimentation (8, 8a) à environ 130 °C, et étant, à la sortie de l'économiseur (2), rapportée au préchauffeur d'eau d'alimentation (8, 8a) puis à nouveau à l'économiseur (2), et la mise en marche de la chaudière de combustion (1) s'effectue lorsque la température de l'air sortant dépasse une valeur qui correspond au point respectif de condensation des fumées.

5. Dispositif pour la production de vapeur dans une centrale de chauffage par évaporation de l'eau d'alimentation, constitué d'une chaudière de combustion (1), qui est reliée en un système du genre circuit avec un récipient collecteur de condensat (10) doté d'une admission de condensat (13), une pompe de condensat (12), un préchauffeur d'eau d'alimentation (8a) et un économiseur (2), et constitué également d'une installation d'épuration (21) pour les fumées évacuées de la chaudière de combustion (1),
**caractérisé** en ce qu'est prévu un circuit supplémentaire de récirculation (7, 7a), par lequel une partie de l'eau d'alimentation échauffée arrive, par l'intermédiaire d'une vanne de soutirage d'eau d'alimentation (6) et d'une vanne de récirculation (15), dans un détendeur (16, 16a) puis dans un récipient de dégazage d'eau d'alimentation (9) et/ou dans un récipient collecteur de condensat (10), l'eau d'alimentation récirculée étant rapportée dans l'économiseur (2) par l'intermédiaire de la pompe de condensat (12) du préchauffeur d'eau d'alimentation (8a) et de la vanne régulatrice d'eau d'alimentation (14).

6. Dispositif selon la revendication 5, **caractérisé** en ce que le diamètre du détendeur (16, 16a), le nombre et les dimensions des buses de sortie de vapeur (17, 17a) et des perçages de sortie d'eau (18, 18a) sont dimensionnés de telle sorte que le niveau d'eau dans le détendeur (16, 16a) permet une séparation fiable du condensat et de la vapeur de détente.
